Europäisches Patentamt

**European Patent Office**

Office européen des brevets

(11) Publication number: **0 004 763**
A2

(12) **EUROPEAN PATENT APPLICATION**

(21) Application number: **79300537.2**

(22) Date of filing: **30.03.79**

(51) Int. Cl.²: **B 60 R 25/02**

(30) Priority: **31.03.78 GB 1278878**

(43) Date of publication of application:
**17.10.79 Bulletin 79/21**

(84) Designated Contracting States:
**BE DE FR GB IT NL SE**

(71) Applicant: **WILMOT BREEDEN LIMITED**
**Amington Road**
**Birmingham 25(GB)**

(72) Inventor: **Artlett-Coe, John Burton**
**20 Walmley Close**
**Solihull West Midlands(GB)**

(72) Inventor: **Jeavons, Philip Swingewood**
**88 Ingestre Road**
**Birmingham 28(GB)**

(74) Representative: **Brown, Michael S**
**WILMOT BREEDEN LIMITED Fordhouse Lane Stirchley**
**Birmingham B30 3BW(GB)**

(54) Vehicle steering locking mechanisms.

(57) A vehicle steering locking mechanism comprises a toothed annulus (18) having, for example, eighteen teeth, which is keyed to the steering shaft. The annulus (18) is contained within a housing (10) which fits on the steering column and a bearing (17) within the housing (10) supports the steering shaft. A bolt (22) is movable under the action of a spring (23) into engagement with the annulus (18) in a direction parallel to the axis of the steering shaft. Retraction of the bolt (22) is effected by means of a cam (27) coupled to a key-operated device (35).

FIG. 2.

EP 0 004 763 A2

Croydon Printing Company Ltd.

This invention relates to vehicle steering locking mechanisms of the kind including a housing which, in use, is attached to the steering column and contains a bolt movable between a position in which it acts to prevent rotation of the steering shaft relative to the housing and thus relative to the steering column and a position in which rotation of the steering shaft is permitted.

The bolt is normally movable under the action of a spring in a direction at right angles to the axis of the steering column whereby a nose portion of the bolt can engage in an aperture in a sleeve fitted to the steering shaft. Although this arrangement is generally acceptable, it does have a number of design limitations, for example, there is normally only one position in which locking can be effected and the amount of torque that a locked column can withstand is limited.

It is accordingly an object of the invention to provide an improved form of vehicle steering locking mechanism which is not subject to the same constraints as existing mechanisms and which permits substantial cost-savings to be obtained.

According to the invention, a vehicle steering locking mechanism of the kind defined above is characterised in that the housing also contains a bearing for the steering shaft and a toothed element which, in use, is fixed to the steering shaft for engagement by the bolt.

The bolt and the toothed element are preferably so arranged that, when a torque is applied to the steering shaft with the bolt engaged with the toothed element, the load transmitted by the toothed element to the bolt acts substantially solely in compression on the bolt, the bolt being movable under the action of a spring in a direction parallel to the axis of the steering shaft and a cam provided for moving the bolt against the action of its spring-loading.

In a preferred embodiment, the housing includes a chamber having a cylindrical wall formed with a rebate which the bolt enters when engaged with the teeth of the annular element so that a nose portion of the bolt, which nose portion is of rectangular cross-section, is then so positioned that a corner thereof is disposed in the space between opposed faces of two adjacent teeth of the annular element, the included angle between said faces being $92^{\circ}$.

The invention will now be described by way of example with reference to the accompanying drawings which illustrate a vehicle steering locking mechanism and in which:-

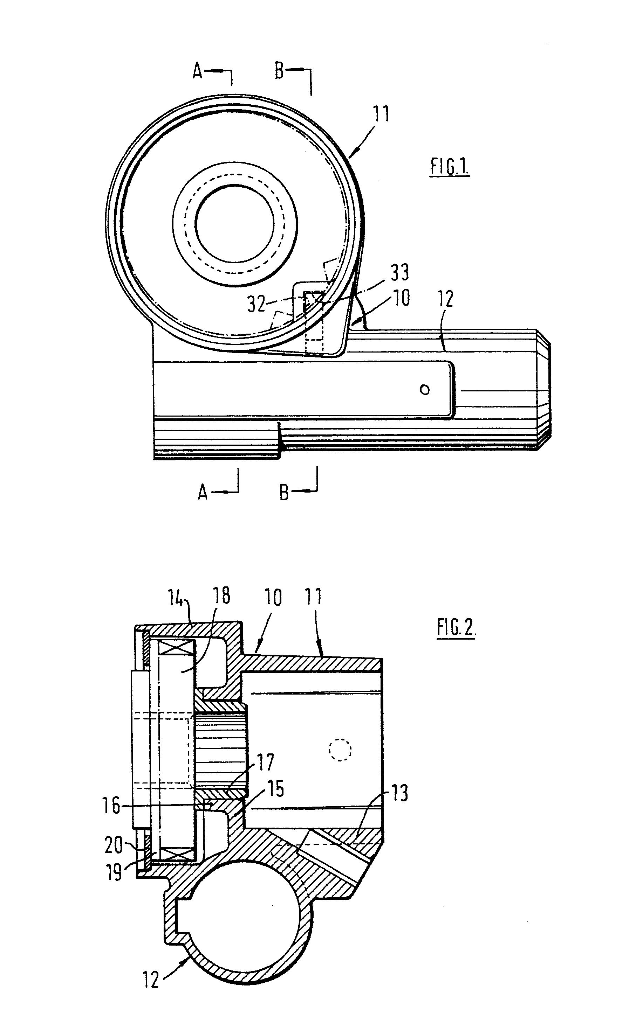

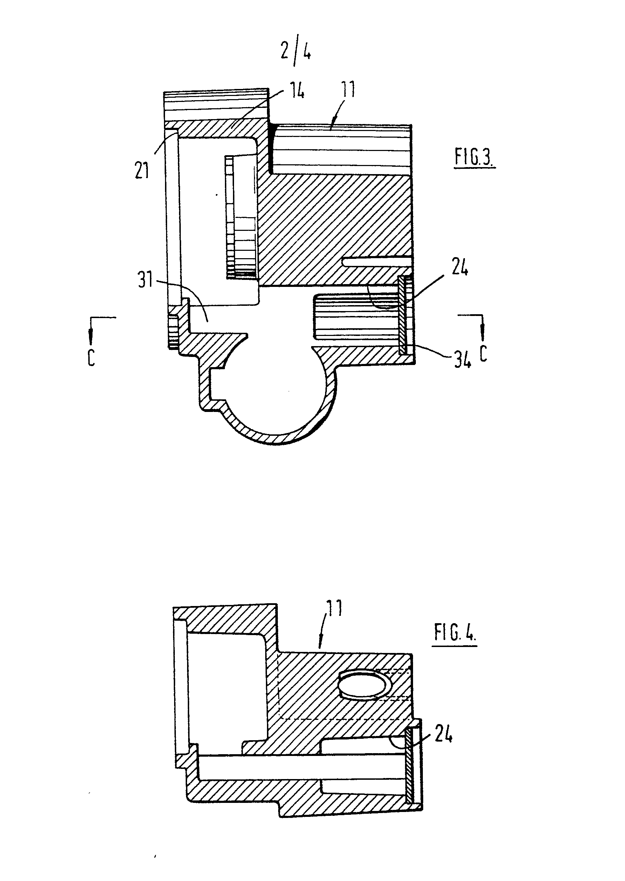

Figure 1 is a plan view of the mechanism,

Figure 2 is a sectional view of the mechanism along the line of A-A of Fig. 1,

Figure 3 is a sectional view of the mechanism housing along the line B-B of Figure 1,

Figure 4 is a sectional view of the housing along the line C-C of Figure 3,

Figure 5 is an underneath plan view of the assembly,

Figure 6 is a transverse sectional view of the assembly illustrating one possible form of key-operated device for use in the assembly,

Figure 7 and 8 are detail views illustrating the interaction between an operating cam and a bolt of the assembly, and

Figure 9 illustrates an annular toothed element which fits on the steering shaft. (For convenience, the key operated device illustrated in Figure 6 has not been shown in Figure 2).

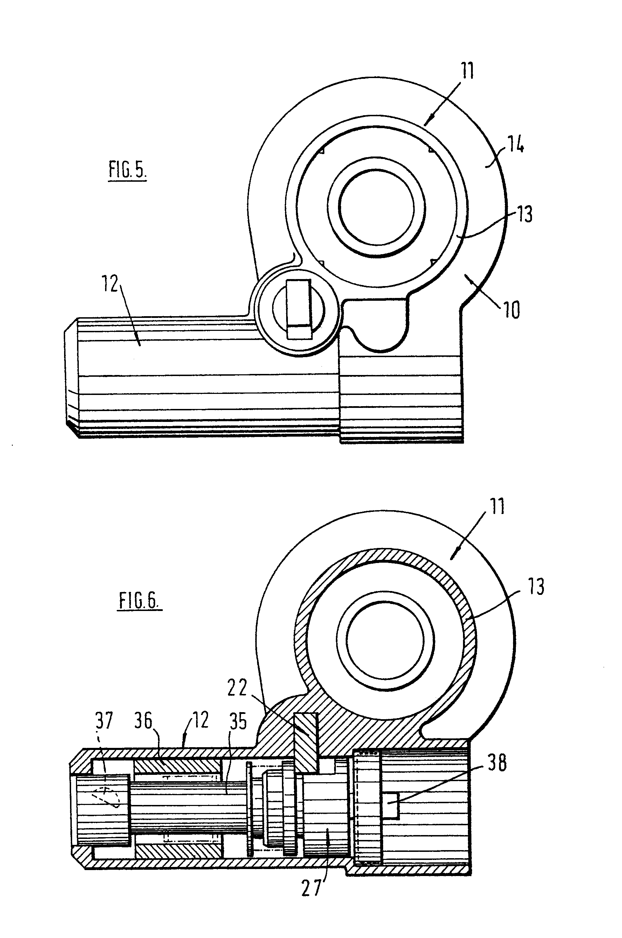

The steering locking assembly shown in the drawings includes a housing 10 which is formed as a die-casting from a zinc based alloy and consists of a main body portion 11 of stepped cylindrical form and a tubular portion 12 within which a key-operated device is located as indicated in Figure 6. The axis of the tubular portion 12 is at right angles to and offset from the axis of the main body portion 11 which has a first lesser diameter part 13 and a somewhat larger diameter part 14 (as shown in Figure2). The first part 13 is fitted on to the top of the vehicle steering column (not shown) and is fixedly attached to the steering column by, for example, self-shearing bolts. The two parts 13 and 14 of the main body portion 11 are separated by an internal annular wall 15 which is provided, at its inner periphery, with a cylindrical lip 16 which affords a seating for a flanged bearing 17 that fits around and supports the vehicle steering shaft (not shown).

As can be seen from Figure 2, the larger diameter part 14 of the main body portion 11 affords a chamber within which an annular externally toothed element 18 is located. The element 18 may be formed as a die-casting from a zinc based alloy. Alternatively it may be formed from steel. If formed as a casting, the toothed portion thereof will be formed integrally with a collar portion 19 which is engaged by an annular fixing element 20 fitted into the end of a chamber so as to abut against a shoulder 21 and provide positive axial location for the annular element 18. Keying means (not shown) act between the annular element 18 and the steering shaft to prevent relative rotation therebetween, which keying means may take the form of a flat on the shaft and a complementary formation on the element 18.

A bolt 22 acted on by a spring 23 is located within a bore 24 in the main body portion 11 and the spring 23 urges the bolt 22 towards the element 18 so that, when the orientation of the element 18 is such that the nose portion 25 of the bolt 22 is aligned with the space between two adjacent teeth, the bolt 22 will be displaced and a locking action will be obtained. The bolt 22 of the rectangular cross-section but is of stepped form such that the end thereof acted on by the spring 23 is larger than the other end thereof, a shoulder 26 being provided facing towards the bore of the tubular portion 12 within which the key-operated device is disposed.  This shoulder 26 cooperates with a cam 27 the profile of which consists of a part-cylindrical portion and a rebate 28 one side of which is defined by a lifting face 29.

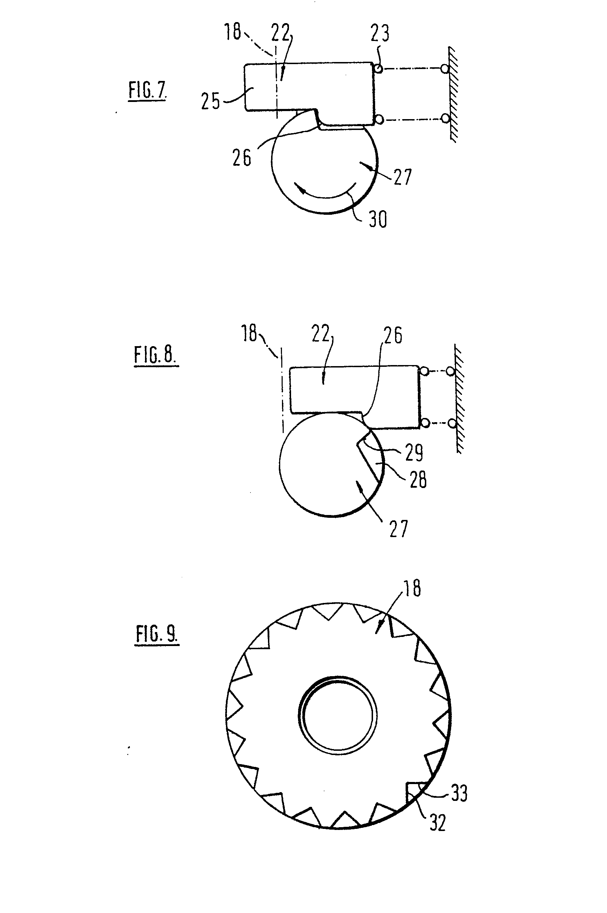

In the locked condition of the device, the cam 27 is in the position shown in Figure 7 and the spring 23 urges the bolt 22 into engagement with the toothed element 18.  When, however, the key is inserted and turned, the cam 27 is rotated in the direction indicated by the arrow 30 in Figure 7 and the lifting face 29 engages the shoulder 26 to displace the bolt 22 into the retracted position shown in Figure 8, the bolt 22 then being held in this position by the part-cylindrical portion of the cam profile.

The mode of intersection of the bore 24 in which the bolt 22 is located and the chamber afforded by the larger diameter part 14 of the main body portion 11 is such that a rebate is afforded in the cylindrical wall of said chamber to receive the nose portion 25 of the bolt 22.  The bolt 22 is moved by the spring 23 in a direction parallel to the axis of the steering shaft and the angle between two adjacent tooth faces for example tooth faces 32 and 33, is $92^{\circ}$, i.e. $90^{\circ}$ plus a clearance factor.  The nose portion 25 of the bolt is thus located in a rebate of rectangular cross-section with one corner thereof disposed between the two tooth faces 32 and 33 and with the opposite corner thereof disposed between two wall surfaces of the main body portion which are also located at substantially $90^{\circ}$ to one another.

If, when the nose portion 25 of the bolt 22 is in its engaged position, a torque is applied to the steering shaft, this torque will be transmitted via the annular element 18 to the nose portion 25 to effect compression of the nose portion 25 between one or other tooth face 32, 33 and the opposite wall surface of the main body portion.  The nose portion 25, since it is substantially solely in compression, is able to withstand substantially greater loads than would be the case if it were subject to shear loads or tensile loads. In addition, the point of interengagement between the bolt 22 and the annular element 18 is at a greater spacing from the axis of the steering shaft than the point of engagement between a bolt and a sleeve of a conventional steering column lock. It is thus possible to use materials which are of lower strength, and thus less expensive, but yet obtain a structure which is inherently stronger than existing steering column locks.

In the particular embodiment illustrated, there are eighteen teeth on the element 18 at an angular spacing of $20^{\circ}$. Thus, if the steering wheel is in a position in which the bolt 22 is not aligned with the space between two adjacent teeth when the locking device is operated to turn the cam 27 into the position shown in Figure 7, the spring 23, which seats against a closure member 34, will urge the nose portion 25 of the bolt 22 against the toothed element 18 and engagement of the bolt 22 will be effected when the steering wheel is turned through the appropriate angle, at most $20^{\circ}$. This is in contrast with conventional devices in which the sleeve fixed to the steering shaft has a single hole such that locking of the steering shaft can only be obtained when the front wheels of the vehicle are in a straight-ahead configuration.

A further advantage of the embodiment illustrated in the drawings is that the locking mechanism housing 10 contains the bearing 17 for the steering shaft. The housing 10 fits directly on the steering column and since the annular element 18 can be keyed inexpensively to the steering shaft, considerable cost-saving benefits arise when the steering assembly as a whole is considered.

The key-operated device includes a lock plug 35 which is rotatable within a cylinder 36 fixed in the tubular portion 12. The lock plug 35 is movable inwardly of the cylinder 36 upon key insertion by the action of a rotary sensor element 37 which is rotatable upon insertion of the key and acts on the plug 35 to displace the plug 35 and hold it in its inward position for as long as the key is inserted. The plug 35 is coupled to the cam 27 and to an operating element 38 of an electrical switch assembly which controls operation of the vehicle auxiliaries and ignition mechanism. Other forms of key-operated device may, however, be employed.

A significant advantage of the invention is that it not only permits the use of a less expensive steering shaft but can also provide a cost reduction in respect of the steering colu   The mechanism may also be assembled complete, together with a front plate, and then attached to the steering column thereby providing a unit which can be tested prior to installation in a vehicle.

MSB/JMF
1.3.79

0004763

## CLAIMS

1  A vehicle steering locking mechanism including a housing which, in use, is attached to the steering column and contains a bolt movable between a position in which it acts to prevent rotation of the steering shaft relative to the housing and thus relative to the steering column and a position in which rotation of the steering shaft is permitted, characterised in that the housing (10) also contains a bearing (17) for the steering shaft and a toothed element (18) which, in use, is fixed to the steering shaft for engagement by the bolt (22).

2  A mechanism according to claim 1, characterised in that the bolt (22) and toothed element (18) are so arranged that, when a torque is applied to the steering shaft with the bolt (22) engaged with the toothed element (18), the load transmitted by the toothed element (18) to the bolt (22) acts substantially solely in compression on the bolt (22).

3  A mechanism according to claim 1, characterised in that the bolt (22) is movable under the action of a spring (23) in a direction parallel to the axis of the steering shaft and a cam (27) is provided for moving the bolt (22) against the action of its spring-loading.

4  A mechanism according to claim 1, characterised in that the housing (10) includes a chamber (14) having a cylindrical wall formed with a rebate which the bolt (22) enters when engaged with the teeth of the annular element (18) so that a nose portion (25) of the bolt (22) is then so positioned that a corner thereof is disposed in the space between opposed faces (32,33) of two adjacent teeth of the annular element (18).

5  A mechanism according to claim 4, characterised in that the nose portion (25) of the bolt (22) is of rectangular cross-section and the included angle between two adjacent tooth faces (32,33) is $92^{\circ}$.

0004763

1/4

FIG.1.

FIG.2.

FIG.3.

FIG.4.

0004763

3/4

FIG.5.

11
14
13
12
10

FIG.6.

11
13
22
37 36 12 35
38
27

FIG. 7.

18 22 23

25

26

27

30

FIG. 8.

18 22 26

29
28

27

FIG. 9.

18

33
32